# EUROPEAN PATENT APPLICATION

(11) **EP 4 780 044 A1**
(43) Date of publication of application: **22.07.2026**
(21) Application number: 26152240.3
(22) Date of filing: 16.01.2026
(51) Int. Cl.: H04W 12/30, H04W 8/20, H04W 12/42

(54) **METHOD, CONFIGURATION PROGRAM, REMOTE MANAGEMENT DATASET, COMPUTER-READABLE DATA CARRIER AS WELL AS SERVER DEVICE FOR CONFIGURING A USER DEVICE AND SAME WITH DATA MANAGEMENT ENTITIES ON DIFFERENT HIERARCHY LEVELS**

(30) Priority: 17.01.2025 US 202519030027
(71) Applicant: Giesecke+Devrient Mobile Security Germany GmbH, 81677 München (DE)
(72) Inventor: Monter Prat, Jordi, Dulles, 20166 (US)
(74) Representative: LKGLOBAL Partnerschaftsgesellschaft mbB

(57) **Abstract**

Methods, systems, and devices for configuring the user device, in particular for communication via mobile telecommunication networks, the method comprising the steps of providing a secure element of the user device, such as an eUICC, with a secure storage location configured to securely store at least one user profile dataset associated to a user and adapted to identify the respective user to allow participation in the mobile telecommunication networks; and installing a remote management dataset in the secure storage location, configured for remotely managing at least one operation of the secure element via the mobile telecommunication networks; wherein the remote management dataset includes at least two data management entities configured to manage the at least one user profile dataset, and wherein different hierarchy levels are being assigned to the at least two data management entities.

## Description

### Technical Field

The present disclosure relates to the field of configuring user devices and their secure elements, for example, Internet-of-Things (IoT) devices, for participating in telecommunication networks. In particular, the present disclosure relates to a method of configuring a user device, in particular for communication via mobile telecommunication networks, to a configuration program for configuring a user device, in particular for communication via mobile telecommunication networks, to a remote management dataset for a secure element of a user device, such as an eUICC, configured for remotely managing at least one operation of the secure element via mobile telecommunication networks, to a user device, in particular an loT device to be configured for communication via mobile telecommunication networks, and to a server device, in particular a security server providing a secure location for handling user profile datasets each associated to a user and adapted to identify the respective user to allow participation in the mobile telecommunication networks.

### Background

User devices, such as personal mobile devices or loT-devices, configured to employ electronic subscriber profiles for communicating on mobile networks, are known from the prior art. Such user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more electronic subscriber profiles that may allow the user devices to connect to one or more mobile networks. A subscriber profile (e.g., an eSIM profile) may be generated by a mobile network operator (MNO) and may be stored, e.g., downloaded to a mobile user device. The subscriber profile may then be installed on a secure element of the user device and used for communication over a corresponding mobile network by the user device.

The secure elements are run by operation systems (OS) containing software and/or firmware for operating the secure elements. Those OS need to be up to date in order to provide full and reliable functionality of the secure elements. An OS Update is especially relevant with the deployment of embedded Secure Elements (eSE) in the form of eUICC or alike. As opposite of traditional pluggable SIMs that can be inserted and removed, eSEs are soldered into user devices, making it very difficult (or costly) to replace them during the life cycle of the user devices.

Consequently, there is a need for so-called firmware-upgrades that allow to modify the content of the eSE in the event that it has to be kept up to date and/or a technical issue has to be fixed. For example, one possible reason for that firmware has to be kept up to date is if a related standard, such as a GSMA specification, relating to the user device changes or is being newly implemented. In any case, firmware upgrades can be carried out with the help of an Open Firmware Loader (OFL), or alike, which is specifically designed software component in charge of firmware upgrades including OS updates in the secure element.

Furthermore, loT standards defined by GSMA in SGP.31 and SGP.32 define certain components for remotely managing operation is carried out on secure elements, such as the elM (eUICC loT Remote Management), a remote management application, which makes use of corresponding elM configuration data, e.g. an loT profile assistant (IPA) which may be regarded as a remote management dataset stored in the user device (IPAd) or in the secure element (IPAe). This component is in charge of the management of eSIM on behalf of an original equipment manufacturer (OEM) in autonomous way, to allow handle of floats of device in an efficient and unhuman/machine intervention. Remotely managing operations of secure elements in general is known from the prior art.

US 2024/129743 A1, for example, relates to a method for personalizing a secure element comprising the following steps: receiving, in a data generator, a request for a bundle of storage images for a plurality of secure elements; obtaining, in the data generator, at least one subscription data set for at least one securing element to be personalized of the plurality of secure elements; providing an operating system or a part of the operating system for the secure element to be personalized; generating, by means of the data generator, a storage image for each of the secure elements according to the received request; and bundling the generated storage image and providing the bundled storage image in the form of a storage image bundle by means of the data generator in order to complete the terminal, thereby introducing at least the storage image of the secure element to be personalized into the secure element. The subscription data set is requested at a subscription management server, in this case an SM-DP+.

US 2021/306347 A1 describes methods, devices and systems for performing remote file management, RFM, operations at a secure element, SE. A secure file update script is received at an OfflineRFMAgent, located within the SE, from an off-card entity, OCE. The secure file update script has been generated offline by an SE issuer managing the OCE, using a decentralized remote file management, DRFM, platform, and comprises a plurality of remote management commands for carrying out file management operations on the SE. In a further step, a security level authentication between the OCE and SE based on the secure file update script is performed. If the security level authentication is successful, in a subsequent step a secure channel session between the OCE and the SE is established through the OfflineRFMAgent. Finally, the plurality of remote management commands is processed to remotely manage a file system on the SE.

EP 3 154 285 A1 refers to a method for incorporating personalization data into a security element of an additional end device. For this purpose, personalization data are supplied for the security element to a first end device by a personalization server. A communication connection is established between the first end device and an additional end device, the additional end device comprising the security element. Finally, the personalization data are transferred from the first end device to the additional end device. The personalization data, for transfer to the additional end device, are embedded into one or more standardized application data object(s).

Methods, systems and devices according to the prior art, as well as current loT standards merely define rudimentary setups for remote management of operations regarding user profile datasets to be carried out on secure elements. For instance, an elM, as defined by GSMA, also referred to as "Associated elM", is any elM with configuration data available in the xUICC for verification of certain elM Configuration Operations (eCO) or Profile State Management Operations (PSMO). There are no definitions for how many Associated elM can be configured in a specific eUICC, allowing multiple instances or levels of elMs.

Approaches for remote management of operations regarding user profile datasets to be carried out on secure elements as known from the prior art can restrict the possibility of establishing mutual relationships between different actors having different roles in the loT ecosystem, as these relationships are limited to a flat relation provided by current definitions and standards as described above. For instance, it is not possible to set a hierarchy structures of elMs where a Root elM could potentially delegate some of the functions to a subordinate elM.

Methods for remotely managing secure elements of user devices as known from the prior art may not fully satisfy all requirements regarding their versatility and interoperability on the one hand, as well as functional safety and security on the other hand. For example, it is desirable that different actors in the loT ecosystem can remotely manage certain operations on secure elements, especially relating to user profile datasets, while ensuring functional safety and security. However, due to limitations and restrictions, as described above, remote management solutions as known from the prior art may not be able to accommodate the potential multitude of requirements and needs of different actors arising in the loT ecosystem in the future. This may in turn limit the functionality, especially a spectrum of (future) capabilities, of the user devices, may compromise functional safety and security when operating user devices, or may even lead to that the devices cannot be configured in a satisfactory manner.

### Summary

It may be seen as an object to improve remote management capabilities for secure elements. In particular, it may thus be seen as an object to provide a way to remotely handle user profile datasets in a manner that a future proof functional spectrum, safety and security may be assured, while not compromising versatility and interoperability of user devices in loT environments with multiple different actors. These objects are at least partly achieved by the subject-matter of the independent claims.

According to an aspect, a method of configuring a user device, in particular for communication via mobile telecommunication networks, is provided, the method comprising the steps of providing a secure element of the user device, such as an eUICC, with a secure storage location configured to securely store at least one user profile dataset associated to a user and adapted to identify the respective user to allow participation in the mobile telecommunication networks; and installing a remote management dataset in the secure storage location, configured for remotely managing at least one operation of the secure element via the mobile telecommunication networks; wherein the remote management dataset includes at least two data management entities configured to manage the at least one user profile dataset, and wherein different hierarchy levels are assigned to the at least two data management entities.

According to an aspect, a configuration program for configuring a user device, in particular for communication via mobile telecommunication networks, is provided wherein the configuration program comprises instructions which, when the configuration program is executed by a secure element and/or a server device, cause the secure element and/or server device to carry out a corresponding method.

According to an aspect, remote management dataset for a secure element of a user device, such as an eUICC, configured for remotely managing at least one operation of the secure element via mobile telecommunication networks, is provided, wherein the remote management dataset includes at least two data management entities configured to manage at least one user profile dataset associated to a user and adapted to identify the respective user to allow participation in the mobile telecommunication networks, and wherein different hierarchy levels are assigned to the at least two data management entities.

According to an aspect, a computer-readable data carrier having stored thereon a corresponding configuration program and/or remote management dataset is provided.

According to an aspect, a user device, in particular an loT device to be configured for communication via mobile telecommunication networks, comprising a secure element such as an eUICC, storing a remote management dataset configured for remotely managing at least one operation of the secure element via mobile telecommunication networks, is provided, wherein the remote management dataset includes at least two data management entities configured to manage at least one user profile dataset associated to a user and adapted to identify the respective user to allow participation in the mobile telecommunication networks, and wherein different hierarchy levels are assigned to the at least two data management entities.

According to an aspect, a server device, in particular a security server providing a secure location for handling user profile datasets each associated to a user and adapted to identify the respective user to allow participation in the mobile telecommunication networks, is provided, wherein the server device is configured to carry out a corresponding method, comprises a corresponding configuration program, comprises a corresponding remote management dataset, and/or comprises a corresponding computer-readable data carrier.

The user device can be an loT device, which can be remotely operated by respective command messages and/or data packages exchanged over mobile telecommunication networks. Different actors in IoT ecosystems may perform different operations regarding user profile datasets stored on secure elements of user devices and the different hierarchy levels. Thereby, a vertical dimension is being added to the structures of remote management datasets.

The proposed solution allows for extending the functions and configuration(s) of remote management datasets, such as eIM(s), to enable complex relations between actors reflecting their individual characteristics, differentiated needs and requirements, as well as potentially hierarchic arrangements. In that manner, new multidimensional consolations and setups that are not possible (or not definable) by remote management datasets according to the prior art, for instance, elM(s), as described in the standards SGP.31 and SGP.32, due to respective limitations, can be build. In that respect, the proposed solution enables to extend elM Associate definitions to create a new type of highly versatile and interoperable elMs.

The proposed solution has the advantage over the prior art, that it enables to configure and update secure elements "Over-The-Air", in loT ecosystems involving multiple actors. Thereby, secure elements and user profile datasets can be handled in a way that a future-proof functional spectrum, safety and security may be assured, while not compromising their versatility and interoperability. Hierarchies for remote data management reflecting actual relationships between different actors in vertical arrangements can be mapped. Actors and/or providers making use of remote management datasets can delegate or cede certain functions and operations to other actors and/or providers according to respective hierarchy levels, for instance the specific or limited functions, capabilities, etc.

Hence, the proposed solution improves remote management capabilities for secure elements. In particular, it enables to remotely handle user profile datasets in a way that a future proof functional spectrum, safety and security may be assured, while not compromising versatility and interoperability of user devices in loT environments with multiple different actors. The solution can be implemented in a closed environment under supervision and control of a trusted entity managing and/or controlling the remote management datasets as well as respective user profile datasets.

Each user profile dataset can be installed on a respective secure element and may include security credentials configured for accessing at least one mobile telecommunication network. Further user profile datasets can be provided for accessing the at least one further mobile telecommunication networks. User profile datasets can comprise respective diversified data configured for accessing the at least one mobile telecommunication network and the at least one further mobile communication network.

A server program dataset may at least in part be provided on the server device and can be configured to interact with the server device and/or at least one hardware security module (HSM) thereof. In other words, the server program dataset may at least partly run on the server device, for example, as a part of a server system dataset configured to operate the server device. Additionally, an administration program dataset can be provided for installing and/or managing the server program dataset, such as for installing and/or updating the server program dataset or respective update data subsets, including the database. Both, the administration program dataset and the server program dataset may be integrated as data subsets into a customer specific dataset, such as a software suite allowing for customization of data on the server device as described herein.

An application program dataset may at least in part be provided on the secure element and can be configured to interact with the remote management dataset, the user device and/or at least one network terminal thereof. In other words, the application program dataset may at least partly run on the secure element, for example, as a part of an operating system dataset and/or the remote management data set configured to operate the secure element. Additionally, an installation program dataset can be provided for installing and/or managing the application program dataset, the remote management dataset, and such of the operating system dataset, such as for installing and/or updating the datasets or respective update data subsets. Both, the installation program dataset and the installation program dataset may be integrated as data subsets into a customization dataset, such as a firmware suite allowing for customization of data on the secure element as described herein.

The application program dataset and/or remote management dataset may be provided as a part of an operating system dataset of the secure element and/or may be configured to interact with the operating system dataset. A complete operating system dataset and/or subsets thereof may comprise the application program dataset and/or remote management dataset. The operating system dataset, application program dataset, and/or remote management dataset may be configured to read, write, delete, manage and/or administer any kind of data stored on the secure element and such are the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

A corresponding computer program, for example, in the form of the configuration program, may comprise instructions which, when the program is executed by a computing device, cause the computing device to execute a method, control a secure element, a user device, and/or a sever device, to perform any of the steps of a method as described herein. In particular, the computer program can comprise instructions which, when the program is executed by a computer device, cause the computer device to configure the user device to communicate via a telecommunication network, cause an interaction with a secure element, such as an eUICC, and/or with a user device comprising the secure element, by means of the configuration program, in order to carry out any steps of a method as described herein. A computer-readable data carrier, such as a computer-readable medium and/or a data carrier signal, may carry the computer program and/or any dataset as mentioned herein.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to a possible embodiment, different access parameters defining different operational spectra can be assigned to the at least two data management entities. In other words, a certain operational spectrum can be assigned to each data management entity. This further helps in providing different actors with a predefined set of capabilities as desired or required for respective application of the involved user profile dataset.

According to a possible embodiment, different security credentials can be provided to the at least two data management entities. The security credentials comprise respective security keys and/or authentication certificates. By providing different security credentials to different data management entities, predefined capabilities, authorisations and/or accesses can be provided according to the respective security levels involved. Furthermore, it may be provided that even with a valid security credential, certain commands and/or operations of a non-privileged data management entity may not carried out if they are assigned to a different hierarchy level and/or belong to another data management entity assigned to a different a level. This further helps in enabling to remotely handle user profile datasets in a way that a future proof functional spectrum, safety and security may be assured, while not compromising versatility and interoperability of user devices in IoT environments with multiple different actors.

According to a possible embodiment, the at least two data management entities can be assigned to the different hierarchy levels according to a pre-defined hierarchical order for the at least two data management entities. For example, such a hierarchical order may be provided in factory and/or in the field as desired or required for arranging the data management entities of the remote management dataset. This additionally helps in providing different actors with a predefined set of capabilities as desired or required for respective application of the involved user profile dataset.

According to a possible embodiment, a relationship between the at least two data management entities can be defined by a relationship parameter. In other words, the relationship parameter may define how different data management entities are related to each other. Thereby, a certain structure and integrity of the remote management dataset can be provided as desired or required for assigning the data management entities to different hierarchy levels.

According to a possible embodiment, the at least two data management entities can comprise at least one of a parent entity and a child entity, and wherein the parent entity is associated to a first hierarchy level and the child entity is associated to a further hierarchy level arranged below the first hierarchy level in an entity hierarchy. Thereby, the vertical dimension of the remote management dataset can be further enhanced. This further helps in providing a certain structure and integrity of the remote management dataset as desired or required for assigning the data management entities to different hierarchy levels.

According to a possible embodiment, the at least two data management entities may further comprise at least one leaf entity associated to an additional hierarchy level arranged below the further hierarchy level in the entity hierarchy. In other words, the leaf entity can provide a lowest hierarchy level. Thereby, the vertical dimension of the remote management dataset can be additionally enhanced, which again helps in providing a certain structure and integrity of the remote management dataset as desired or required for assigning the data management entities to different hierarchy levels.

According to a possible embodiment, the parent entity may serve as a root for establishing the entity hierarchy. With such a root role, the parent entity may have a maximum of access rights for performing respective operations. In other words, the parent entity may provide the vastest spectrum of PSMO and ECO functions and operations, . The parent entity may possess all access rights of its respective child and/or leaf entities. This may further help in enabling to remotely handle user profile datasets in a way that a future proof functional spectrum, safety and security may be assured, while not compromising versatility and interoperability of user devices in loT environments with multiple different actors.

According to a possible embodiment, each of the at least two data management entities may be identified by a unique entity identifier. Such a unique identifier helps in unequivocally addressing the data management entities and/or to receive certain messages back from them. This further helps in handling a multitude of user profile datasets in a way that a future proof functional spectrum, safety and security may be assured, while not compromising versatility and interoperability of user devices in IoT environments with multiple different actors.

According to a possible embodiment, the at least two data management entities may be queried for their respective entity identifier; the entity identifiers may be received from the queried data management entities; and an entity list of the at least two data management entities may be generated based on the received entity identifiers. For example, such an entity list can be generated upon request and/or as scheduled by the server device, user device, and/or a secure element. The list provides an overview and thereby facilitates to manage the involved management entities and respective remote management datasets in a manner that a future proof functional spectrum, safety and security may be assured, while not compromising versatility and interoperability of user devices in loT environments with multiple different actors.

### Brief Description of the Drawings

Fig. 1 is a schematic illustration of a communication system configured for carrying out a method.
Fig. 2 is a schematic illustration of a remote management dataset configured for carrying out a method.

### Detailed Description

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

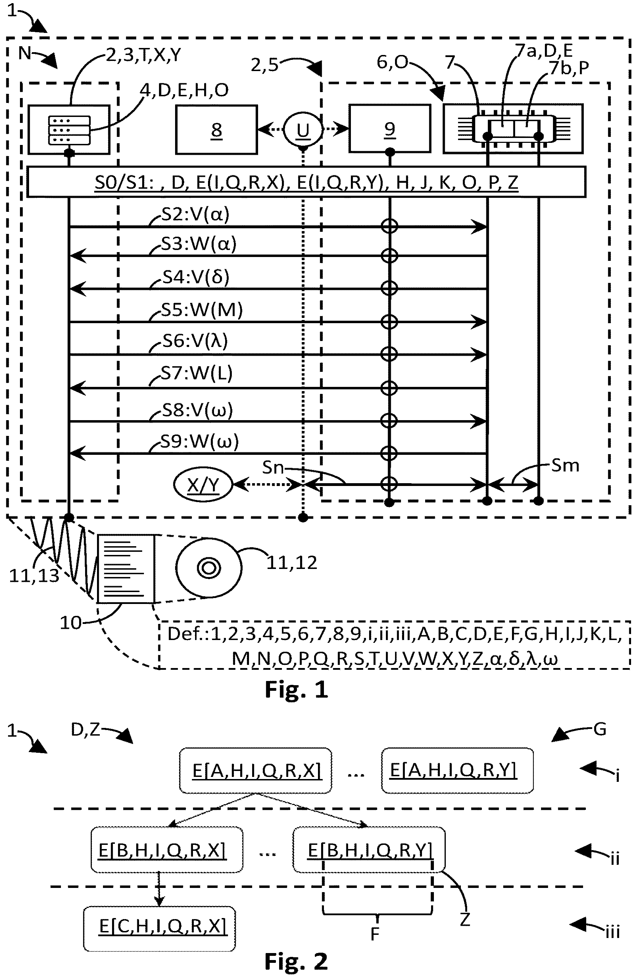

Fig. 1 shows an schematic illustration of an example of a communication system 1 comprising a computing device 2, for instance, in the form of a server device 3 controlled by a trusted entity T, which can include a hardware security module 4 adapted to store, manage and/or provide remote management datasets A, operating system datasets O and/or user profile datasets P for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smartwatch, etc., to be associated with a personal entity. For example, the server device 3 may be provided in the form of a Server for Subscription Manager Data Preparation + (SM-DP+).

The server device 3 and/or the hardware security module 4 may be operated by means of a respective server program dataset which may involve routine server processes. A database containing an administered set of user profile datasets P can be administered by means of the server device 3 and/or the hardware security module 4. The administered set of user profile datasets P can be any set of user profile datasets P that is being managed by the respective trusted entity T or at least a part of the entirety of managers a proper datasets P, for example, specific user profile datasets P intended for a certain application, customer, and/or mobile communication network N.

In the present example, the user devices 5 may be adapted for secure operation, transactions and/or communication, e.g., via a mobile telecommunication networks N by means of at least one user profile dataset P to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location 7 may provide different memory regions, such as at least one first memory region 7a and at least one second memory region 7b.

The at least one user profile dataset P is associated to a respective user U, can be configured according to respective diversified data, such as security credentials H, a profile identifier, authentication certificates H, and/or security keys to allow access at least one mobile telecommunication network N and/or data objects. The at least one user profile P, diversified data, and/or data object can have a predefined data format as required for participating in the mobile telecommunication networks N, and can be stored in respective memory regions 7a, 7b of the secure storage location 7. By accessing the telecommunication networks N, the user may be provided with respective network services and access to data objects. For example, a mobile telecommunication network N may be a public network (PN). Further mobile telecommunication networks N may be a non-public network (NPN), such as a private network of a certain government, non-government institution, e.g., schools, colleges, government agencies, departments, and universities, or alike, and since our private companies, service providers, etc.

A management application 8 may be provided which can be configured to allow the user U to communicate with the user device 5, in particular the secure element 6, for example, directly and/or through a communication interface 9 to the user device 5. The management application 8 can be provided in the form of a remote manager, such as an eSIM loT remote manager (elM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer data packages, such as eUICC Packages, for instance to carry out Profile State Management and elM configuration tasks by means of the elM. For example, the communication interface 9 may be provided as a part of a local management application, such as a loT Profile Assistant (IPA), which may take the form of an loT Profile Assistant (IPAd) provided to the user device 5, and/or an IoT Profile Assistant provided (IPAe) arranged in the secure element 6.

Furthermore, the operating system dataset O may comprise and/or may be configured to interact with the remote management dataset D, the at least one user profile P and/or security credentials H, including profile identifiers I, authentication certificates J and/or security keys K. The security credentials H may comprise any kind of credentials defined by e.g., the GSMA, or alike. The security keys K may comprise any kind of cryptographic code or key element which may be adapted to interact with the user devices 5, the secure elements 6, and/or the server device 3 of the trusted entity T as an issuer of any part of the remote management dataset D, the server program dataset B, the security credentials H, the diversified data, the at least one profile dataset P, the operating system dataset O, profile identifiers, and/or the authentication certificates J, the security keys K, and/or any component thereof. The authentication certificates J may be any kind of electronic certificate, for example, that can be issued by the trusted entity T, for authenticating an origin of the user devices 5, the secure elements 6, the secure storage location 7, the remote management dataset D, application program datasets, the security credentials H, the diversified data, the security keys K, the operating system dataset O, the at least one user profile P, the profile identifiers, and/or any component thereof.

In any of the embodiments of the communication system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the security system 1 and any components thereof communicate as specified in the configuration program 10. Parameters associated with and/or underlying the security system 1, any of the components thereof and/or any steps S carried out thereby, can be defined in and/or by the configuration program 10.

For carrying out the steps S, the configuration program 10 may provide and/or define respective command messages, such as application protocol data units (APDU), which can be configured to interact with the user devices 5, the secure elements 6, the secure storage location 7, the remote management dataset D, the security credentials H, the diversified data L, the operating system dataset O, the at least one profile dataset P, the profile identifiers, the mobile telecommunication networks N and/or any component thereof. Transmission lines (not shown) may be provided for handling and/or transferring any of the above data components and/or data objects, for example, via mobile telecommunication networks N as parts thereof or elements connected thereto. Therefore, the mobile telecommunication networks N may comprise any kind of wired and/or wireless transmission and/or broadcasting chains or lines, including the Internet (for transmissions "Over-The-Air") as well as other physical and/or non-physical data carriers, which can be configured and secured as desired and required by the communication system 1 and its components for carrying out any of the steps S as described herein.

In a first step S1, the server device 3 may provide any of the data components of the configuration system 1, including the operating system dataset O, possibly along with application program datasets, a remote management dataset D, respective diversified data L and/or at least one user profile P associated with the user U, to the secure element 6 of the user device 5, for example through the communication interface 9 to be stored in the secure storage location 7 for deployment to the user U, for example, the form of respective data packages Z. The at least one user profile P may be created based upon respective diversified data kept in the database for the respective user U. In particular, certain security credentials H may have a high or even the highest security level conceivable for the secure element 6. Any of these components may be provided to enable access to data objects, such as Executable Load Files (ELF), data blobs, or alike.

In the present example, the data provision and step 1 can be associated with a pre-issuance condition of the user device 5 and/or the secure element 6. Any of the steps taking place after the activation process in step 2 can be associated with a post-issuance condition of the user device 5 and/or the secure element 6. Providing an installation program dataset to the user device 5 and/or the secure element 6 can therefore be regarded as a zeroth step S0 which may take place in a factory and/or manufacturing facility before the first step S1 of providing data to the user device 5 and/or the secure element 6. For example, the remote management dataset D may be installed in the first memory region 7a, and the user profile dataset P may be installed and the second memory region 7b.

The remote management dataset D comprises at least two data management entities E. The data management entities E may be associated to different actors, such as a first actor X, and a second actor Y, which in combination may constitute, may be a part of, and/or may be associated to the user U, to the trusted entity T, and/or any other participant in the communication system 1. Entity identifiers I may be provided to uniquely identify each of the data management entities E. Relationship parameters Q may define relationships, links, and connections between the data management entities F. The trusted entity, the user U, and/or the actors X, Y, may operate the secure element 6, in particular, for remotely managing the user profile dataset P via the telecommunication network, according to respective access parameters R assigned to the data management entities E.

For managing and handing the remote management entities E, respective request command messages V may be used. The secure element 6, the remote management dataset G and/or the remote management entities E may respond to such command messages V via respective response messages W. The request messages V and/or response messages W may be sent in the form of the data packages Z between remote management entities E a respective remote management dataset D, as well as via the telecommunication network N, for example, from the server device 3, the user U, as this or the actors X, Y, to the secure element 6 via the communication interface 9, for operating the secure element 6, the remote management dataset G and/or the remote management entities E and vice versa.

The command messages V may comprise commands for entity creation α, entity update δ, entity listing λ, and/or entity deletion ω. As respective response messages W or a part of such response messages W, entity creation may be confirmed, an entity update M, for example, in the form of a respective update dataset, may be provided, an entity list L may be provided and/or created, and/or an entity may be deleted, respectively. In the present example, for the sake of clarity and conciseness, the command messages V and response messages W are illustrated as if they were to take place between the server device 3 and the secure element 6 of the user device 5 via the communication interface 9, which may be configured as and/or involve an ESep interface between an elM and an eUICC used to transfer eUICC packages for Profile State Management Operations (PSMO) and elM Configuration Operation (ECO).

In a second step S2, the command message V with the entity creation command α may be sent to the secure element 6. A respective remote management entity E can then be created in the remote management dataset D as requested. As a response to the creation, in a third step S3, a response message W regarding confirmation or failure of the entity creation command α can be returned, for example, in the form of a data package Z.

In a fourth step S4, the secure element 6 may send a command message V with an entity update command δ or request to the server device 3. In a fifth step S5, a respective entity update dataset M may be provided by the server device 3 in response to receiving the entity update command δ. For example, the update dataset M may be provided with, accompanied by, and/or provided as a respective response message W, for example, in the form of a data package Z.

In a sixth step S6, the server device 3 may send a command message V with an entity listing command λ to the secure element 6. In a seventh step S7, the entity listing command λ may cause the secure element 6 and/or the remote management dataset D to return all entity identifiers I, and/or to provide the entity list L containing the entity identifiers I. For example, the entity list L may be provided from the secure element 6 to this device 3 with, accompanied by, and/or provided as a respective response message W, for example, in the form of a data package Z.

In an eights step S8, the server device 3 may send a command message V with an entity deletion command ω to the secure element 6. In a ninth step S9, the entity deletion command ω may cause the secure element 6 and/or the remote management dataset D to delete remote management and the E as requested. As a response to the deletion, a response message W regarding confirmation or failure of the deletion command α can be returned, for example, in the form of a data package Z.

Remote steps Sn and management steps Sm may be carried out as desired or required for initiating and/or performing operations, in particular, regarding management of the at least one user profile dataset P, by the user U, and/or actors X, Y, for example, via the remote management application 8 and/or the convocation interface 9. The remote steps Sn may particularly involve any kind of information is data packages Z, exchanged between the user U, and/or actors X, Y, on the one side, and the remote management dataset D with respective remote management entities E on the other side. The management steps Sm may particularly involve any kind of information and/or data packages Z, exchanged between the remote management dataset D with respective remote management entities E on the one side, and the at least one user profile dataset P the other side.

Fig. 2 shows a schematic illustration of a remote management dataset D configured for carrying out a method. Here it becomes apparent that the remote management entities E are arranged according to an entity hierarchy G with different hierarchy levels, which may comprise a first hierarchy level i, a second hierarchy level ii and/or a third hierarchy level ii. The first hierarchy level i may be top-level. The second hierarchy level ii may be a middle level or lower level. The first hierarchy level iii may be regarded as a lowest level or bottom level.

The entity hierarchy G further be regarded as genealogy of the involved remote management entities E in that they can be related to each other as defined by their respective relationship parameters Q. Parent entities A, child entities B and/or leaf entities C can be provided. Parent entities A can be arranged on the first hierarchy level i. Child entities B can be arranged on the second hierarchy level ii. Leaf entities C can be arranged on the third hierarchy level iii.

The parent entities A can serve as a root, which can be identified as such in the respective relationship parameter R, and may have the vastest set of operational capabilities as defined in their respective access parameters R. Hence, the parent entities A can have all access rights that the respective child entities B and/or leaf entities C may have, but preferably not vice versa. Any operations carried out by the child entities B and/or leaf entities C may have to be authorised by their respective parent A, as desired or required.

The remote management dataset D as such, the child entities B and/or the leaf entities C may contain root identifiers, identifying the respective parent entities A, for example, as a part of the relationship parameter Q. Each of the roles of the data management entities E as parent entities A, child entities B, or leaf entities C, as well as their respective security credentials H, entity identifiers I, relationship parameters Q, access parameters R, and/or associated actors X, Y may be defined as provided by respective data fields F. The remote management dataset D and/or the management entities E may contain such data fields F and/or may be provided in the form of data packages Z as desired or required.

The present exemplary embodiments of remote management datasets D may be implemented by extended elM associate definitions to create a new type of elM (e.g., eIM Child or subordinate). The child entities B may be provided in the form of elM children that can depend on their respective parent entities A, for example in the form of a root elM, which may be an elM that does not have any parent which can be treated equivalent to the Associated elM as defined by current SGP.31 issued by the GSMA. Any newly defined remote management entity E (e.g., Child or Successor elM) may have the same functions an attributes as defined by respective relationship parameters Q and/or access parameters R, the following remarks or restrictions, while the following rules or restrictions may be applied for processing different command messages conducting respective operations:
Child elM depends from a parent elM (the relationship is built from a new field that contains the parent elM ID)

To add a new child elM, initial elM must be already configured, it is not possible to add a child elM without a root elM (an elM that does not have any parent, same definition as current elM in SGP.31 and SGP.32).

There is no limitation in the hierarchy levels (more than one level is possible), but lower levels must not have more privileges than its parent elM. In that sense, elM children cannot assign more privileges than currently it has. For instance a non-root elM (elM with a parent) cannot create a root elM.

Signatures of EuiccPackageSigned containing following EimConfigurationDataChild eCO commands: add and update elMs commands will be signed by the ancestor elM, so only the parent eIM are able to send them. Deletion of eIM can be performed by itself or any of its ancestors

If elM certificate child is present (instead of PK) verification with parent key shall be done

The following exemplary ASN1 definition below can describes corresponding data packages Z, for example in the form of elM configuration data objects (e.g. *EimConfigurationDataChild):*

```
-- ASN1START
 EimConfigurationDataChild ::= SEQUENCE {
    eimParentId [0] UTF8String (SIZE(1..128)), -- eimId of the parent eIM
    eimConfigurationData[1] EimConfigurationData, -- eim configuration
 data, same as Associated eIM
    eimPsmoPrivileges[2] EimPsmoPrivileges OPTIONAL, -- eim PSMO
 privileges, if not present no privileges guaranteed
    eimProfileDownloadPrivileges[3] EimProfileDownloadPrivileges, -- eim
 Profile download privileges, if not present no privileges guaranteed
    plmnList[4] SEQUENCE OF Plmn OPTIONAL -- List of optional PLMNs which
 eIM is restricted to operate with
 }
 EimPsmoPrivileges ::= BIT STRING {
    enable(0),
    disable(1),
    delete(2),
    getRAT(3),
    listProfileInfo(4),
    configureImmediateEnable(5),
    setFallbackAttribute(6),
    unsetFallbackAttribute(7),
    setDefaultDpAddress(8)
 }
 EimProfileDownloadPrivileges ::= BIT STRING {
    activationCode(0),
    contactDefaultSmdp(1),
    contactSmds(2)
 }
 Plmn ::= OCTET STRING (SIZE(3))
 -- ASN1STOP
```

Such an exemplary *EimConfigurationDataChild* data object as proposed above may have the following data fields F, which may serve as configuration fields:
- relationship parameter R, e.g., *eimParentId:* IDentifier of the parent elM which the child elM is associated with.
- *eimConfigurationData:* elM configuration data (may have the same or at least similar configuration as current elM definition from SGP.32 specifications).
- Access parameters R, e.g. *eimPsmoPrivileges:* for example, a bit string of Profile state management operations that the elM child has authorization to execute.
- Further access parameters R, e.g. *eimProfileDownloadPrivileges:* for example, a bit string of profile download options that the elM child has authorization to execute.
- Additional access parameters R, e.g. *plmnList:* for example, a list of PLMNs where the child elM is authorized to execute PSMO commands. This field may be regarded as being optional, if not present no restriction applies. Otherwise the eUICC may verify that PLMN list matches with the PLMN from the profile include in a PSMO (for instance by checking the MCC/MNC from profileowner METADATA as defined in SGP.22 or any other mechanism).

According to the present exemplary embodiments, an ESep interface can be provided as an/or at least a part of the communication interface 9 between elM and eUICC, and can be used to transfer eUICC packages for Profile State Management Operations (PSMO) and elM configurations. eIM Configuration Operations (eCO) defined in section 2.10.1 of SGP.32 v1.2. to transfer elM configuration(s) by elM to the eUICC. In SGP.32 section 2.11, it is described the elM package structures and specifically the elM configuration data included in EuiccPackageRequest, below the relevant components defined for eCOs as shown in the following illustrative example:

```
 -- ASN1START
 EuiccPackageRequest ::= [81] SEQUENCE { -- Tag ' BF51',
 #SupportedForPsmoV1.0.0#
    euiccPackageSigned EuiccPackageSigned,
    eimSignature [APPLICATION 55] OCTET STRING -- Tag '5F37'
 }
 EuiccPackageSigned ::= SEQUENCE {
    eimId [0] UTF8String (SIZE(1..128)),
    eidvalue [APPLICATION 26] Octet16, -- Tag '5A'
    countervalue [1] INTEGER,
    eimTransactionId [2] TransactionId OPTIONAL,
    euiccPackage EuiccPackage
 }
 EuiccPackage ::= CHOICE {
    psmoList SEQUENCE OF Psmo, -- #SupportedForPsmoV1.0.0#
    ecoList SEQUENCE OF Eco -- #SupportedForEcoV1.0.0#
 }
 Eco ::= CHOICE {
    addEim [8] EimConfigurationData, -- for eIM configuration data see
 2.11.1
    deleteEim [9] SEQUENCE {eimId [0] UTF8String},
    updateEim [10] EimConfigurationData,
    listEim [11] SEQUENCE {}
 }
 -- ASN1STOP
```

The exemplary ASN1 code above can be redefined and discussed below that in order to provide different approaches in the implementation of the Eco commands. The result structures defined in SGP.32 can be extended to include error(s) derived from the new elM structure definition. New error(s) added are commented in the exemplary snipped code below:

```
 -- ASN1START
 AddEimResult ::= CHOICE {
    associationToken [4] INTEGER,
    addEimResultCode INTEGER {
      ok(0),
      insufficientMemory(1),
      associatedEimAlreadyExists(2),
      ciPKUnknown(3),
      invalidAssociationToken(5),
      counterValueOutOfRange(6),
      commandError(7),
      rootEimNotFound(8), -- New result definition, when root eIM does not
 exist
      undefinedError(127)
    }
  }
  DeleteEimResult ::= INTEGER {
    ok(0),
    eimNotFound(1),
    lastEimDeleted(2), -- no eIM Configuration Data available in eUICC,
    commandError(7),
    eimwithAssociatedChilds(8), -- New result definition, in case of eIM
 has other eIMs associate
    undefinedError (127)
  }
  UpdateEimResult ::= INTEGER {
    ok(0),
    eimNotFound (1),
    ciPKUnknown(3),
    counterValueOutOfRange(6),
    commandError(7),
    rootEimNotFound(8), -- New result definition, when root eIM does not
 exist
    undefinedError(127)
  }
 -- ASN1STOP
```

For example, the following two approaches can be defined to enable and create elM hierarchy structures from current data objects definition:
1. Modify the current functions and data definitions used in ESep interface to include the necessary attributes for a multi-level elM hierarchy.
2. Create specific functions in ESep interface to carry out the multi-level elM hierarchy.

As to the first exemplary approach, this option involves modifying the current functions defined for elMs configuration over ESep and specifically the elM Configuration Operations (eCO) included in EuiccPackageRequest that has been described previously. The following exemplary changes may be applied to the ASN1 Eco original definition, to include the above-mentioned *EimConfigurationDataChild* configuration(s):

```
 -- ASN1START
 Eco ::= CHOICE {
    addEim [8] CHOICE {
        eimConfigurationData [0] EimConfigurationData, -- for eIM
 configuration data see 2.11.1
        eimConfigurationDataChild [0] EimConfigurationDataChild -- new
 definition including successor eIM configuration data
    },
    deleteEim [9] SEQUENCE {eimId [0] UTF8String},
    updateEim [10] CHOICE {
        eimConfigurationData [0] EimConfigurationData, -- for eIM
 configuration data see 2.11.1
        eimConfigurationDataChild [0] EimConfigurationDataChild -- new
 definition including successor eIM configuration data
    },
    listEim [11] SEQUENCE {}
 }
 -- ASN1STOP
```

The following exemplary modifications on Eco definitions can be applied in order to implement command messages V and/or response messages W based on respective commands for handing the remote management entities E as described above:
- The entity creation command α may e.g. be defined as *addEim:* Two options can be defined to add either an Associated elM (as current specifications) or a EimConfigurationDataChild to the eUICC by providing its eIM Configuration Data, its parent eimID and the authorization(s).
- The entity deletion command ω may e.g. be defined as *deleteEim:* Delete command configuration remains as it is defined, eCO included in EuiccPackageRequest can be signed either by the elM to be deleted or any of its parent elM ancestors. Additionally, if a root/parent EIM is triggered to be deleted and if it has a child eIM associated, two options are possible according to the following exemplary restrictions: 1) the deletion is not allowed until the associated elM is deleted (otherwise and error message is being sent); 2) the deletion will trigger the deletion of the root elM and any other associated elM that might be configured (deletion in cascade).
- The entity update command δ may e.g. be defined as *updateEim*: This command is extended to allow that eimConfigurationData (the associated elM) or EimConfigurationDataChild can update its configurations. Same restrictions for update elM currently defined (i.e., eimID cannot be updated) can be applied for the EimConfigurationDataChild and additionally the eimParentld may not be allowed to be modified as it is provided to determine the ancestor eIM which key can be used to sign the package.
- The entity listing command λ may e.g. be defined as *listEim:* No changes required in this command as it only lists elMIDs. Successors elMs shall be included along with associated elMs.

As to the second exemplary approach, this option may make use of an extension of ESep interface by defining new set of functions to manage elM configurations for successors elMs over ESep interface as were defined in previous sections. The option can thereby provide provides a clear separation between managing successors elMs and its ancestors as differentiate functions are defined. The exemplary ASN1 code below provides the definition of the new proposed commands, further explanation of each command is provided in subsequent sections:

```
 -- ASN1START
 Eco ::= CHOICE {
    addEim [8] EimConfigurationData, -- for eIM configuration data see
 2.11.1
    deleteEim [9] SEQUENCE {eimId [0] UTF8String},
    updateEim [10] EimConfigurationData,
    listEim [11] SEQUENCE {},
    addEimChild [12] EimConfigurationDataChild, -- new command to add
 successors eIM configuration data
    deleteEimChild [13] SEQUENCE {eimId [0] UTF8String}, -- new command to
 delete successors eIM configuration data
    updateEimChild [14] EimConfigurationDataChild, -- new command to
 update successors eIM configuration data
    listEimChild [15] SEQUENCE { eimId [0] UTF8String (SIZE(1..128)) }
 }
 -- ASN1STOP
```

The following exemplary definitions can be applied in order to implement command messages V and/or response messages W based on respective commands for handing the remote management entities E as described above:
- The entity creation command α may e.g. be defined as *addEimChild:* This is a new command over ESep interface to allow the addition of a new elMs that belongs or it is configured by an ancestor elM. The eimParentld included in EimConfigurationDataChild object must exist and the signature of the EuiccPackageRequest must be calculated with the Parent elM key configured for that eIM or any of its ancestors. In case of a eimCertificate is provided instead of eimPublicKey, the certificate shall be validated with ancestor elM key.
- The entity deletion command ω may e.g. be defined as *deleteEimChild*: This is a new command over ESep interface to allow the deletion of an elM that belongs or it is configured by an ancestor elM. The eimID must exist (it has to be previously created with addEimChild command) and must have an ancestor elM associated with (configured in its eimParentld). The signature of the EuiccPackageRequest must be calculated with its own key or the key configured for the parent elM or any of its ancestors, this will guarantee that only itself or any ancestor in its hierarchy can delete it. If the elM to be deleted is the ancestor of any other elM, two possible options are possible: The deletion is not allowed until the associated elMs are deleted (error is sent as a response). The deletion will trigger the deletion of the elM and any of all the successors elMs (deletion in cascade).
- The entity update command δ may e.g. be defined as *updateEimChild*: This new command allows a parent (or ancestor) elM to update any of its elM successors. Same restrictions for update elM currently defined (i.e., eimID cannot be updated) applies for the EimConfigurationDataChild and additionally the eimParentld is not allowed to be modified as it is provided to determine the ancestor elM which key is used to sign the package.
- The entity listing command λ may e.g. be defined as *listEimChild*: This command allows to list elM successors of a given eimlD, it includes its immediate successors and any successor or its successors.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Aspects

1. A method of configuring a user device for communication via mobile telecommunication networks, the method comprising:
   providing a secure element of the user device, such as an eUICC, with a secure storage location configured to securely store at least one user profile dataset associated to a user and adapted to identify the respective user to allow participation in the mobile telecommunication networks; and
   installing a remote management dataset in the secure storage location, configured for remotely managing at least one operation of the secure element through the mobile telecommunication networks;
   wherein the remote management dataset includes at least two data management entities configured to manage the at least one user profile dataset, and
   wherein different hierarchy levels are assigned to the at least two data management entities.
2. The method according to aspect 1, wherein different access parameters defining different operational spectra are being assigned to the at least two data management entities.
3. The method according to aspect 1, wherein different security credentials are provided to the at least two data management entities.
4. The method according to aspect 1, further comprising the step of assigning the at least two data management entities to the different hierarchy levels according to a predefined hierarchical order for the at least two data management entities.
5. The method according to aspect 1, wherein a relationship between the at least two data management entities is being defined by a relationship parameter.
6. The method according to aspect 1, wherein the at least two data management entities comprise at least one of a parent entity and a child entity, and wherein the parent entity is associated to a first hierarchy level and the child entity is associated to a further hierarchy level arranged below the first hierarchy level in an entity hierarchy.
7. The method according to aspect 6, wherein the at least two data management entities further comprise at least one leaf entity associated to an additional hierarchy level arranged below the further hierarchy level in the entity hierarchy.
8. The method according to aspect 6, wherein the parent entity serves as a root for establishing the entity hierarchy.
9. The method according to aspect 1, wherein each of the at least two data management entities are being identified by a unique entity identifier.
10. The method according to aspect 9, further comprising the steps of querying the at least two data management entities for their respective entity identifier;
   receiving the entity identifiers from the queried data management entities; and
   generating an entity list of the at least two data management entities based on the received entity identifiers.
11. A remote management dataset for a secure element of a user device being an embedded universal integrated circuit card (eUICC) and configured for remotely managing at least one operation of the secure element via mobile telecommunication networks, said remote management dataset comprising:
   at least two data management entities configured to manage at least one user profile dataset associated to a user and adapted to identify the respective user to allow participation in the mobile telecommunication networks,
   wherein different hierarchy levels are assigned to the at least two data management entities.
12. The remote management dataset according to aspect 11, wherein different access parameters defining different operational spectra are being assigned to the at least two data management entities.
13. The remote management dataset according to aspect 11, wherein different security credentials are provided to the at least two data management entities.
14. The remote management dataset according to aspect 11, further comprising the step of assigning the at least two data management entities to the different hierarchy levels according to a predefined hierarchical order for the at least two data management entities.
15. The remote management dataset according to aspect 11, wherein a relationship between the at least two data management entities is defined by a relationship parameter.
16. A user device being an loT device configured for communication via mobile telecommunication networks, comprising:
   a secure element being an embedded universal integrated circuit card (eUICC), storing a remote management dataset configured for remotely managing at least one operation of the secure element via mobile telecommunication networks,
   wherein the remote management dataset includes at least two data management entities configured to manage at least one user profile dataset associated to a user and adapted to identify the respective user to allow participation in the mobile telecommunication networks, and
   wherein different hierarchy levels are assigned to the at least two data management entities.
17. The user device according to aspect 16, wherein the at least two data management entities comprise at least one of a parent entity and a child entity, and wherein the parent entity is associated to a first hierarchy level and the child entity is associated to a further hierarchy level arranged below the first hierarchy level in an entity hierarchy.
18. The user device according to aspect 17, wherein the at least two data management entities further comprise at least one leaf entity associated to an additional hierarchy level arranged below the further hierarchy level in the entity hierarchy.
19. The user device according to aspect 17, wherein the parent entity serves as a root for the entity hierarchy.
20. The user device according to aspect 16, wherein each of the at least two data management entities are identified by a unique entity identifier.

## Claims

1. A method of configuring a user device (5), in particular for communication via mobile telecommunication networks (N), the method comprising the steps of
providing a secure element (6) of the user device (5), such as an eUICC, with a secure storage location (7) configured to securely store at least one user profile dataset (P) associated to a user (U) and adapted to identify the respective user (U) to allow participation in the mobile telecommunication networks (N); and
installing a remote management dataset (D) in the secure storage location (7), configured for remotely managing at least one operation of the secure element (6) via the mobile telecommunication networks (N);
wherein the remote management dataset (D) includes at least two data management entities (E) configured to manage the at least one user profile dataset (P), and
wherein different hierarchy levels (i, ii, iii) are being assigned to the at least two data management entities (E).

2. The method according to claim 1, wherein different access parameters (R) defining different operational spectra are being assigned to the at least two data management entities (E).

3. The method according to claim 1 or 2, wherein different security credentials (H) are provided to the at least two data management entities (E).

4. The method according to at least one of claims 1 to 3, further comprising the step of assigning the at least two data management entities (E) to the different hierarchy levels (i, ii, iii) according to a pre-defined hierarchical order for the at least two data management entities (E).

5. The method according to at least one of claims 1 to 4, wherein a relationship between the at least two data management entities (E) is being defined by a relationship parameter (R).

6. The method according to at least one of claims 1 to 5, wherein the at least two data management entities (E) comprise at least one of a parent entity (A) and a child entity (B), and wherein the parent entity is associated to a first hierarchy level (i) and the child entity (B) is associated to a further hierarchy level (ii) arranged below the first hierarchy level (i) in an entity hierarchy (G).

7. The method according to claim 6, wherein the at least two data management entities (E) further comprise at least one leaf entity (C) associated to an additional hierarchy level (iii) arranged below the further hierarchy level (ii) in the entity hierarchy (G).

8. The method according to claim 6 or 7, wherein the parent entity (A) serves as a root for establishing the entity hierarchy (G).

9. Method according at least one of claims 1 to 8, wherein each of the at least two data management entities (E) are being identified by a unique entity identifier (I).

10. Method according to claim 9, further comprising the steps of
querying the at least two data management entities (E) for their respective entity identifier (I);
receiving the entity identifiers (I) from the queried data management entities (E); and
generating an entity list (L) of the at least two data management entities (E) based on the received entity identifiers (I).

11. A configuration program (10) for configuring a user device (5), in particular for communication via mobile telecommunication networks (N), wherein the configuration program (10) comprises instructions which, when the application program (10) is executed by a secure element (6), cause the secure element (6) to carry out a method of at least one of claims 1 to 10.

12. A remote management dataset (D) for a secure element (6) of a user device (5), such as an eUICC, configured for remotely managing at least one operation of the secure element (6) via mobile telecommunication networks (N),
wherein the remote management dataset (D) includes at least two data management entities (E) configured to manage at least one user profile dataset (P) associated to a user (U) and adapted to identify the respective user (U) to allow participation in the mobile telecommunication networks (N), and
wherein different hierarchy levels (i, ii, iii) are assigned to the at least two data management entities (E).

13. Computer-readable data carrier (11, 12, 13) having stored thereon a configuration program (10) according to claim 11 and/or a remote management dataset (D) according to claim 12.

14. User device (3), in particular an loT device to be configured for communication via mobile telecommunication networks (N), comprising a secure element (6) configured to carry out a method according to at least one of claims 1 to 10, comprises a configuration program (10) according to claim 11, a remote management dataset (D) according to claim 12 and/or a computer-readable data carrier (11, 12, 13) according to claim 13.

15. Server device (4), in particular a security server providing a secure location for handling user profile datasets (P) each associated to a user (U) and adapted to identify the respective user (U) to allow participation in the mobile telecommunication networks (N), wherein the server device (4) is configured to carry out a method according to at least one of claims 1 to 10, comprises a configuration program (10) according to claim 11, a remote management dataset (D) according to claim 12 and/or a computer-readable data carrier (11, 12, 13) according to claim 13.
